# EUROPEAN PATENT SPECIFICATION

(11) **EP 1 528 292 B1**
(45) Date of publication and mention of the grant of the patent: **10.10.2007**
(21) Application number: 04025443.5
(22) Date of filing: 26.10.2004
(51) Int. Cl.: F16H 59/10, B60K 20/02

(54) **Shift lever device**
Wählhebeleinrichtung
Levier de commande d'une transmission

(30) Priority: 27.10.2003 JP 2003365735
(43) Date of publication of application: 04.05.2005
(73) Proprietor: KABUSHIKI KAISHA TOKAI RIKA DENKI SEISAKUSHO, Niwa-gun, Aichi-ken (JP)
(72) Inventor: Kato, Masashi, Ohguchi-cho Niwa-gun Aichi-ken (JP)
(74) Representative: Goddar, Heinz J.

(56) References cited:
- EP-A- 0 770 799
- US-A- 3 971 564
- US-A- 4 552 031
- US-A- 5 622 086
- US-A- 5 862 708
- PATENT ABSTRACTS OF JAPAN vol. 012, no. 494 (P-805), 23 December 1988 (1988-12-23) & JP 63 205715 A (TOYOTA MOTOR CORP; others: 01), 25 August 1988 (1988-08-25)

## Description

### Field of the Invention

The present invention relates to a shift lever device in which a shift lever is made to pass through a first moving member and a second moving member, according to the preamble of claim 1 and as disclosed in US 3971564.

### Description of the Related Art

As a shift lever device, there is known a structure in which a shift lever is guided in a guide hole provided in a supporting frame so as to swing in the vehicle longitudinal direction and in the vehicle transverse direction (for example, see Japanese Utility Model Registration No. 2584865).

In this shift lever device, the shift lever is made to pass through a long hole of a slide plate and in an insertion hole of a rotating cover. The guide hole of the supporting frame is closed by the slide plate, and the long hole of the slide plate is closed by the rotating cover. Further, even when the shift lever is swung and the slide plate and the rotating cover are moved, the state in which the guide hole of the supporting frame is closed by the slide plate and the long hole of the slide plate is closed by the rotating cover is maintained.

However, in the aforementioned shift lever device, the slide plate is disposed in a state of being curved in the vehicle longitudinal direction, and the rotating cover is formed in the shape of a flat plate. Therefore, the rotating cover is disposed in a state of being bent by being pressed by the slide plate particularly in front and rear sections thereof.

As a result, when the shift lever is swung and the rotating cover is rotated with respect to the slide plate, the sliding resistance of the rotating cover to the slide plate is large, thereby raising a problem that an operator's feeling in operating the shift lever is poor.

Moreover, the rotating cover does not entirely adhere to the slide plate, and a clearance between a peripheral edge of the long hole of the slide plate and the rotating cover is not fixed. Therefore, there also exists a problem that the design properties are poor.

### SUMMARY OF THE INVENTION

In view of the aforementioned circumstances, it is an object of the present invention to provide a shift lever device in which an operator's feeling in operating a shift lever can be improved.

A first embodiment of the present invention is a shift lever device 1 which comprises the features of claim 1.

In accordance with a second embodiment of the present invention, in the shift lever device of the first embodiment, the facing surface is formed as a spherical surface.

In accordance with a third embodiment of the present invention, in the shift lever device of the first or second embodiment, a clearance between a peripheral edge of the first hole or the second hole, that holes are respectively provided in the first moving member and the second moving member, and the facing surface is made substantially constant.

In accordance with a fourth embodiment of the present invention, in the shift lever device of the first embodiment, a curved surface is formed on a lower surface of the first moving member and a facing surface is formed on an upper surface of the second moving member.

In accordance with a fifth embodiment of the present invention, in the shift lever device of the first embodiment, the facing surface is a cubic surface.

In accordance with a sixth embodiment of the present invention, in the shift lever device of the fourth embodiment, a peripheral edge of the upper surface of the second moving member is formed so as to project upward.

In the shift lever device according to the present invention, the shift lever is made to movably pass through the first hole formed in the first moving member, and the first moving member is made movable by movement of the shift lever. Further, the second moving member faces the first hole, and the shift lever is made to pass through the second hole formed in the second moving member. When the shift lever is moved, the second moving member is moved and the state in which the second moving member faces the first hole is maintained.

The curved surface is provided in any one of the first moving member and the second moving member in a state in which the one moving member is installed in the shift lever device.

The facing surface provided in the other of the first moving member and the second moving member faces the curved surface, and the facing surface is formed so as to be bent in a direction in which the curved surface is bent. For this reason, even when the other of the first moving member and the second moving member is moved in relation to the one of the moving members, and the facing surface is moved in relation to the curved surface, the sliding resistance between the curved surface and the facing surface (between the first moving member and the second moving member) can be reduced, and an operator's feeling in operating a shift lever can be improved.

It may be preferable that the facing surface is formed as a spherical surface. Therefore, even when the facing surface is rotated in relation to the curved surface, the sliding resistance between the curved surface and the facing surface can be reduced irrespective of the rotational position of the facing surface in relation to the curved surface.

It may be preferable that the clearance between the peripheral edge of the first hole or the second hole, which holes are respectively provided in the first moving member and the second moving member, and the facing surface is made substantially fixed. Therefore, the design properties of the shift lever device can be improved.

### BRIEF DESCRIPTION OF THE DRAWINGS

Fig. 1 is a cross-sectional view showing a principal portion of a shift lever device according to an embodiment of the present invention when seen from the left side of a vehicle body.
Fig. 2 is a side view showing the principal portion of the shift lever device according to the embodiment of the present invention when seen from the left side of the vehicle body.
Fig. 3 is a perspective view showing a first cover slide and a second cover slide of the shift lever device according to the embodiment of the present invention when seen obliquely from the right rear side of the vehicle body.
Fig. 4 is a plan view showing the shift lever device according to the embodiment of the present invention.

### DETAILED DESCRIPTION OF THE INVENTION

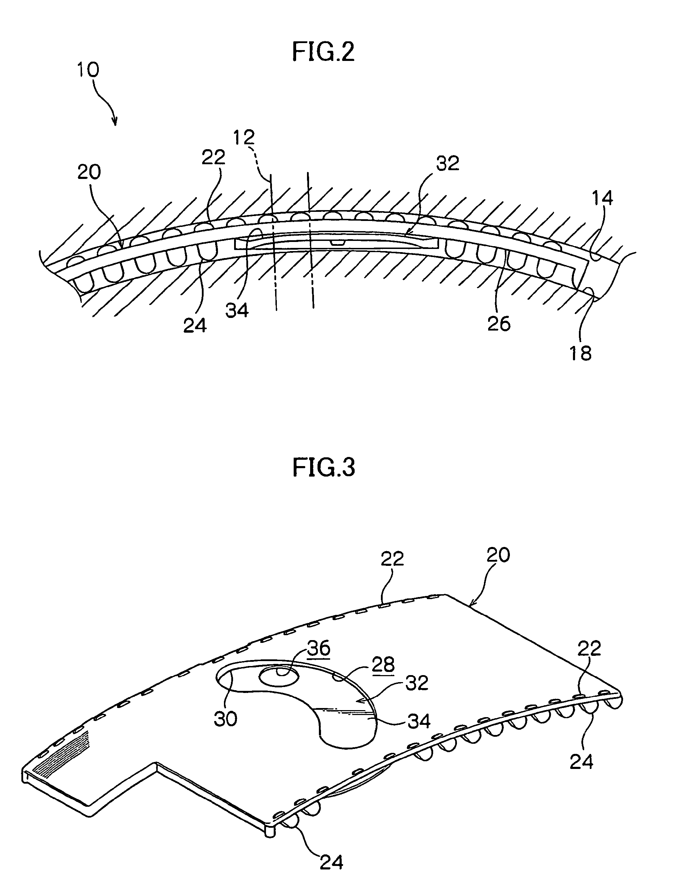

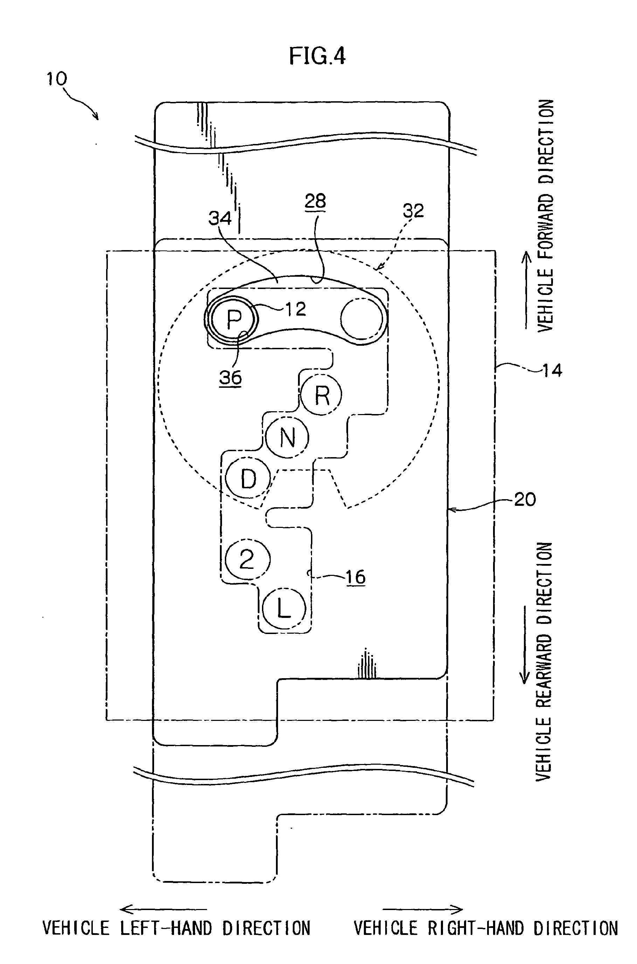

Fig. 2 is a side view of a principal portion of a shift lever device 10 according to an embodiment of the present invention when seen from the left side of a vehicle body. Fig. 4 is a plan view of the shift lever device 10. In the present embodiment, a vehicle front side will be referred to as "front side", a vehicle rear side will be referred to as "rear side", and a vehicle right hand and a vehicle left hand will be respectively referred to as "right hand" and "left hand".

The shift lever device 10 according to the present embodiment is formed as a floor mounting type shift lever device that is provided on a floor surface of a vehicle interior, and is also formed as a gate type (zigzag shape) shift lever device.

The shift lever device 10 includes a shift lever 12. The shift lever 12 is made to be swinging (movable) around a lower end thereof in the vehicle longitudinal direction and in the vehicle transverse direction.

The shift lever device 10 includes a cover 14 having the shape of a rectangular lid. A guide hole 16 is formed so as to pass through an upper wall of the cover 14. The guide hole 16 is formed so as to have a predetermined bent configuration when seen from the top, and the shift lever 12 is inserted through the guide hole 16. Due to the shift lever 12 being guided by the guide hole 16 and pivot-operated in the vehicle longitudinal direction and in the vehicle transverse direction, a shift position of the shift lever 12 is changed (in the present embodiments, to the "P" shift position, the "R" shift position, the "N" shift position, the "D" shift position, the "2" shift position, and the "L" shift position). Further, the lower surface of the upper wall of the cover 14 is curved downward, in the shape of a circular arc when seen from the side, in the vehicle longitudinal direction.

A pair of rails 18 are provided below the upper wall of the cover 14, and the rails 18 are disposed along the vehicle longitudinal direction, respectively, at the right hand and left hand of the guide hole 16. Further, the upper surfaces of the rails 18 are curved downward in the shape of a circular arc in the vehicle longitudinal direction in such a manner as to correspond to the lower surface of the upper wall of the cover 14.

A first cover slide 20 (see Fig. 3), which is formed in the shape of a substantially rectangular plate and serves as a first moving member, is provided below the upper wall of the cover 14. The first cover slide 20 has elasticity. A predetermined number of upper projections 22 each having the shape of a plate is provided respectively at the right-hand and left-hand ends of the upper surface of the first cover slide 20. The predetermined number of upper projections 22 are disposed along the vehicle longitudinal direction, and the upper surface of each upper projection 22 is curved in the shape of a circular arc when seen from the side. A predetermined number of lower projections 24 each having the shape of a plate is provided respectively at the right-hand and left-hand ends of the lower surface of the first cover slide 20. The predetermined number of lower projections 24 are disposed along the vehicle longitudinal direction, and the lower surface of each lower projection 24 is curved in the shape of a circular arc when seen from the side.

The first cover slide 20 is disposed between the upper wall of the cover 14, and the pair of rails 18 in the state in which the upper projections 22 come into contact with the lower surface of the upper wall of the cover 14 and the lower projections 24 come into contact with the rails 18. As a result, the first cover slide 20 is disposed in such a manner as to be curved downward, in the shape of a circular arc when seen from the side, along the lower surface of the upper wall of the cover 14 and the upper surfaces of the rails 18 in the vehicle longitudinal direction. The lower surface of the first cover slide 20 is formed as a curved surface 26 (a second order curved surface, i.e., quadratic surface) that is curved downward, in the shape of a circular arc when seen from the side, along the lower surface of the upper wall of the cover 14 and the upper surfaces of the rails 18 in the vehicle longitudinal direction.

The first cover slide 20 is made slidable (movable) only in the forward and rearward directions between the upper wall of the cover 14 and the pair of rails 18, and is prevented from sliding in the right-hand and left-hand directions of the first cover slide 20. Further, the first cover slide 20 faces the entire guide hole 16 of the cover 14 and closes the guide hole 16 in a region other than a portion in which a first hole 28 (described below) is formed. In addition, a clearance between the first cover slide 20 and the peripheral edge of the guide hole 16 is made (substantially) fixed (constant).

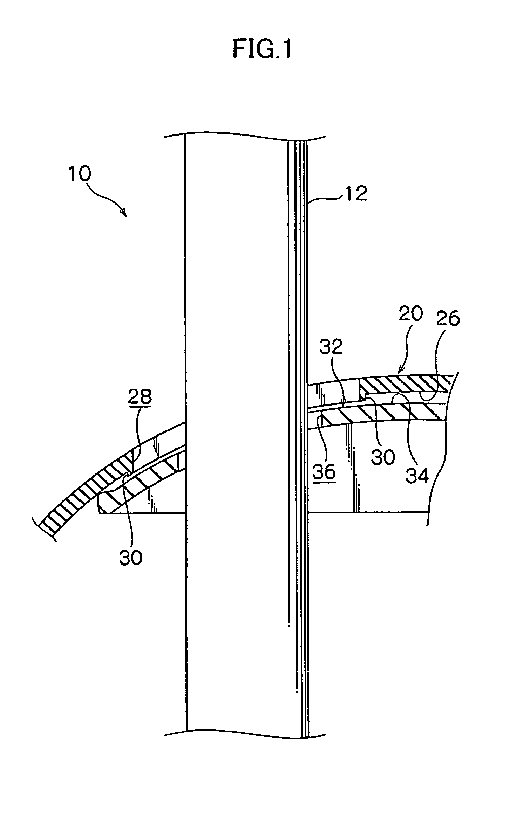

The first hole 28 is formed so as to pass through a substantially intermediate portion of the first cover slide 20 in the vehicle longitudinal direction. The first hole 28 extends both in the right-hand and left-hand directions of a vehicle in such a manner as to be curved in the shape of a circular arc around the rotational center of a second cover slide 32 (at the rear side of the first hole 28) which will be mentioned below. As shown in Fig. 1 as well, a plate-shaped peripheral wall 30 is formed on a lower surface of the first cover slide 20 so as to be protruded at the peripheral edge of the first hole 28. The heightwise dimension of the peripheral wall 30 is made minimum (for example, zero) at the center of the first hole 28 in the right-hand and left-hand directions, and gradually becomes larger to both the right-hand and left-hand sides of the first hole 28, correspondingly to a facing surface 34 of the second cover slide 32. The shift lever 12 is inserted in and passes through the first hole 28, and is also movable within the first hole 28 along the longitudinal direction of the first hole 28 (that is, the direction in which the first hole 28 is curved).

A substantially disc-shaped second cover slide 32 (see Fig. 3) serving as a second moving member is provided below the lower surface (the curved surface 26) of the first cover slide 20. The second cover slide 32 has elasticity. The center of the second cover slide 32 is located at the rear side of the center of the first hole 28 in the vehicle transverse direction. The second cover slide 32 is supported at the lower surface of the first cover slide 20 so as to be rotatable (movable) around the center thereof.

The second cover slide 32 faces the entire first hole 28 and closes the first hole 28 in a region other than the portion in which the second hole 36 is formed. As a result, the guide hole 16 of the cover 14 is closed (covered) by the first cover slide 20 and the second cover slide 32 in the entire region of the guide hole 16 not including the position at which the second hole 36 is disposed.

The central portion of the upper surface of the second cover slide 32 is formed as a planar surface, and a predetermined clearance is formed between the central portion of the upper surface of the second cover slide 32 and the lower surface of the first cover slide 20. The circumferential edge portion of the second cover slide 32 upper surface is protruded upward. As a result, even if the upper surface of the second cover slide 32 comes into contact with the lower surface of the first cover slide 20 particularly in the front and rear portions thereof, the upper surface of the second cover slide 32 is made into line contact with the lower surface of the first cover slide 20 in the circumferential edge thereof.

A region of the second cover slide 32 upper surface other than the central portion and the circumferential edge portion of the second cover slide 32 is formed as the facing surface 34. The facing surface 34 is formed as a spherical surface (a third order curved surface, i.e., cubic surface) that is curved downward so as to correspond to the lower surface of the first cover slide 20. Further, a clearance between the facing surface 34 and the peripheral edge of the first hole 28 is made (substantially) fixed (constant) due to the aforementioned peripheral wall 30.

As also shown in Fig. 1, a second circular hole 36 is formed in the peripheral portion of the second cover slide 32 (in a portion in which the facing surface 34 is formed). The shift lever 12 is made to pass through the second hole 36 in such a manner as to be substantially engaged in the second hole 36.

When the shift lever 12 is pivot-operated in the vehicle longitudinal direction, the second hole 36 is moved by the shift lever 12 in the vehicle longitudinal direction, and the first cover slide 20 and the second cover slide 32 are made to slide integrally in the vehicle longitudinal direction. On the other hand, when the shift lever 12 is pivot-operated in the vehicle transverse direction, the second hole 36 is moved by the shift lever 12 in the vehicle transverse direction. As a result, the second cover slide 32 is rotated in relation to the first cover slide 20 in the state in which the position of the second hole 36 in the vehicle longitudinal direction is not changed, and the first cover slide 20 and the second cover slide 32 are made to slide integrally in the vehicle longitudinal direction.

Further, in the range in which the first cover slide 20 is made to slide in the vehicle longitudinal direction due to switching of the shift position of the shift lever 12, the state in which the first cover slide 20 faces the entire guide hole 16 of the cover 14 and closes the guide hole 16 in the region other than the portion in which the first hole 28 is formed is maintained. At the same time, the clearance between the first cover slide 20 and the peripheral edge of the guide hole 16 is kept (substantially) fixed. Moreover, in the range in which the second cover slide 32 is rotated in relation to the first cover slide 20 due to switching of the shift position of the shift lever 12, the state is maintained in which the second cover slide 32 faces the entire first hole 28 and closes the first hole 28 in a region other than the portion in which the second hole 36 is formed. At the same time, the clearance between the facing surface 34 and the peripheral edge of the first hole 28 is kept (substantially) fixed.

Next, an operation of the present embodiment will be described.

In the shift lever device 10 having the aforementioned structure, the first cover slide 20 faces the entire guide hole 16 of the cover 14, and the second cover slide 32 faces the entire first hole 28 of the first cover slide 20. The shift lever 12 is made to pass through the first hole 28 in a movable manner, and the shift lever 12 is made to pass through the second hole 36 of the second cover slide 32.

When the shift lever 12 is pivot-operated, at least one of the sliding movement of the first cover slide 20 and the second cover slide 32 in the vehicle longitudinal direction, and the rotation of the second cover slide 32 in relation to the first cover slide 20 is carried out. At the same time, the state in which the first cover slide 20 faces the entire guide hole 16 and the second cover slide 32 faces the entire first hole 28 is maintained.

Incidentally, the lower surface of the first cover slide 20 is formed as the curved surface 26 that is curved downward in an installed state.

In this case, the facing surface 34 of the second cover slide 32 upper surface faces the curved surface 26, and the facing surface 34 is formed as a spherical surface that is curved downward (in the direction in which the curved surface 26 is bent) correspondingly to the curved surface 26. Accordingly, the second cover slide 32 in an installed state can be prevented from being bent by the first cover slide 20 or it is suppressed. As a result, even when the second cover slide 32 is rotated in relation to the first cover slide 20 due to the pivot-operation of the shift lever 12 and the facing surface 34 is rotated in relation to the curved surface 26, the sliding resistance between the curved surface 26 and the facing surface 34 (that is, between the first cover slide 20 and the second cover slide 32) can be reduced and an operator's feeling in operating the shift lever 12 can be improved.

In addition, the facing surface 34 is formed as a spherical surface as described above, and therefore, even when the facing surface 34 is rotated in relation to the curved surface 26 as in the present embodiment, the sliding resistance between the curved surface 26 and the facing surface 34 can be constantly reduced irrespective of the rotational position of the facing surface 34 in relation to the curved surface 26.

Further, due to the peripheral wall 30 provided in the peripheral edge of the first hole 28 on the lower surface of the first cover slide 20, the clearance between the peripheral edge of the first hole 28 and the facing surface 34 is made fixed. As a result, the design properties can be improved.

In the present embodiment, although the second cover slide 32 is formed so as to be rotatable in relation to the first cover slide 20, the second cover slide (the second moving member) may be made slidable in relation to the first cover slide (the first moving member).

Further, in the present embodiment, the facing surface 34 is formed as a spherical surface. However, the facing surface may be formed so as to be curved in the shape of a circular arc when seen from the side (that is, a secondary curved surface).

Moreover, in the present embodiment, the curved surface 26 is provided in a state in which the first cover slide 20 is installed, and the facing surface 34 is formed in the second cover slide 32. However, a structure may also be applied in which a curved surface may be provided in a state in which the second cover slide (the second moving member) is installed, and a facing surface is formed in the first cover slide (the first moving member).

Furthermore, in the present embodiment, although the shift lever device 10 is formed into a floor mounting type and gate type (zigzag shape) structure, the shift lever device is not limited to the same.

The features disclosed in the foregoing description, in the claims and/or in the accompanying drawings may, both separately and in any combination thereof, be material for realising the invention in diverse forms thereof.

## Claims

1. A shift lever device (10) comprising:
a first moving member (20) in which a first hole (28) through which a shift lever (12) passes in a movable manner is formed, the first moving member (20) being made movable by movement of the shift lever (12);
a second moving member (32) facing the first hole (28) and having a second hole (36) formed therein, through which the shift lever (12) passes, wherein when the shift lever (12) is moved, the second moving member (32) being moved and maintained in the state of facing the first hole (28);
a curved surface (26) provided in one of the first moving member (20) and the second moving member (32) in a state in which the one moving member (20, 32) is installed in the shift lever device (10); and
a facing surface (34) provided in the other of the first moving member (20) and the second moving member (32), the facing surface (34) facing the curved surface (26) and formed so as to be bent in a direction in which the curved surface (26) is bent,
wherein
the facing surface is formed as a third order curved surface,
**characterized in that**
the curved surface (26) is a quadratic surface,
a peripheral wall is formed on the lower surface of the first moving member (20) so as to project downward from a peripheral edge of the first hole (28) and
the peripheral wall is formed such that the heightwise dimension thereof becomes minimum at the central portion of the first hole (28) in the vehicle transverse direction, whereby the clearance between the peripheral edge of the first hole (28) and the facing surface (34) is made constant.

2. The shift lever device (10) according to claim 1, wherein the facing surface is formed as a spherical surface.

3. The shift lever device (10) according to claim 1 or 2, wherein a clearance between a peripheral edge of the first hole (28) or the second hole (36), that holes (28, 36) are respectively provided in the first moving member (20) and the second moving member (32), and the facing surface (34) is made substantially constant.

4. The shift lever device (10) according to claim 1, wherein a curved surface is formed on a lower surface of the first moving member (20) and a facing surface (34) is formed on an upper surface of the second moving member (32).

5. The shift lever device (10) according to claim 1, wherein the facing surface (34) is a cubic surface.

6. The shift lever device (10) according to claim 4, wherein a peripheral edge of the upper surface of the second moving member (32) is formed so as to project upward.

## Patentansprüche

1. eine Schalthebeleinheit (10) mit:
- einem ersten sich bewegenden Element (20), in der eine erste Bohrung (28) ausgebildet ist, durch die ein Schalthebel (12) in einer beweglichen Weise verläuft, wobei das erste sich bewegende Element (20) sich bei einer Bewegung des Schalthebels (12) bewegt,
- einem zweiten sich bewegenden Element (32), das zu der ersten Bohrung (28) weist und in der eine zweite Bohrung (36) ausgebildet ist, durch die der Schalthebel (12) verläuft, wobei dann, wenn der Schalthebel (12) bewegt wird, das zweite sich bewegende Element (32) bewegt wird und der Zustand des Weisens zu der ersten Bohrung (28) beibehalten wird;
- einer gekrümmten Fläche (26), die in dem ersten sich bewegenden Element (20) oder dem zweiten sich bewegenden Element (32) vorgesehen ist in einem Zustand, in dem das eine sich bewegende Element (20, 32) in der Schalthebeleinheit (10) installiert wird; und
- eine zugewandte Fläche (34), die in dem anderen des ersten sich bewegenden Elements (20) oder des zweiten sich bewegenden Elements (32) vorgesehen ist, wobei die zugewandte Fläche (34) zu der gekrümmten Fläche (26) weist und so ausgebildet ist, dass sie in einer Richtung, in der die gekrümmte Fläche (25) gebogen ist, gebogen ist;
wobei
die zugewandte Fläche als eine gekrümmte Fläche dritter Ordnung ausgebildet ist, **dadurch gekennzeichnet, dass**
- die gekrümmte Fläche (26) eine quadratische Oberfläche ist,
- eine Umfangswand an der unteren Fläche des ersten sich bewegenden Elements (20) derart ausgebildet ist, dass sie von einem Umfangsrand der ersten Bohrung (28) nach unten vorragt, und
- die Umfangswand derart ausgebildet ist, dass ihre Höhe an einem Mittelabschnitt der ersten Bohrung (28) in der Querrichtung des Fahrzeugs minimal wird, wobei das Spiel zwischen dem Umfangsrand der ersten Bohrung (28) und der zugewandten Fläche (34) konstant ist.

2. Die Schalthebeleinheit (10) nach Anspruch 1, wobei die zugewandte Fläche als eine Kugelfläche ausgebildet ist.

3. Die Schalthebeleinheit (10) nach Anspruch 1 oder 2, wobei ein Spiel zwischen einem Umfangsrand der ersten Bohrung (28) oder der zweiten Bohrung (36), wobei die Bohrungen (28, 36) jeweils in dem ersten sich bewegenden Element (20) und dem zweiten sich bewegenden Element (32) vorgesehen sind, und der zugewandten Fläche (34) im Wesentlichen konstant ausgebildet ist.

4. Die Schalthebeleinheit (10) nach Anspruch 1, wobei eine gekrümmte Fläche auf der unteren Fläche des ersten sich bewegenden Elements (20) ausgebildet ist und eine zugewandte Fläche (34) auf einer oberen Fläche des zweiten sich bewegenden Elements (32) ausgebildet ist.

5. Die Schalthebeleinheit (10) nach Anspruch 1, wobei die zugewandte Fläche (34) eine kubische Fläche ist.

6. Die Schalthebeleinheit (10) nach Anspruch 4, wobei ein Umfangsrand der oberen Fläche des zweiten sich bewegenden Elements (32) so ausgebildet ist, dass sie nach oben vorragt.

## Revendications

1. Dispositif de levier de changement de vitesse (10) comprenant :
un premier élément mobile (20) dans lequel un premier orifice (28) est formé à travers lequel passe un levier de changement de vitesse (12) d'une manière mobile, le premier élément mobile (20) étant rendu mobile par un mouvement du levier de changement de vitesse (12) ;
un deuxième élément mobile (32) faisant face au premier orifice (28) et ayant un deuxième orifice (36) formé dans celui-ci, à travers lequel passe le levier de changement de vitesse (12), dans lequel quand le levier de changement de vitesse (12) est déplacé, le deuxième élément mobile (32) étant déplacé et maintenu dans l'état faisant face au premier orifice (28) ;
une surface courbée (26) disposée dans l'un parmi le premier élément mobile (20) et le deuxième élément mobile (32) dans un état dans lequel ledit élément mobile (20, 32) est agencé dans le dispositif de levier de changement de vitesse (10); et
une surface frontale (34) disposée dans l'autre parmi le premier élément mobile (20) et le deuxième élément mobile (32), la surface frontale (34) faisant face à la surface courbée (26) et formée afin d'être cintrée dans une direction dans laquelle la surface courbe (26) est cintrée,
dans lequel
la surface frontale est formée comme une surface courbée de troisième ordre,
**caractérisé en ce que**
la surface courbée (26) est une surface quadratique,
une paroi périphérique est formée sur la surface inférieure du premier élément mobile (20) afin de faire saillie vers le bas à partir d'un bord périphérique du premier orifice (28) et
la paroi périphérique est formée de sorte que sa dimension en hauteur devienne minimale à la partie centrale du premier orifice (28) dans la direction transversale du véhicule, par lequel l'espacement entre le bord périphérique du premier orifice (28) et la surface frontale (34) est rendu constante.

2. Dispositif de levier de changement de vitesse (10) selon la revendication 1, dans lequel la surface frontale est formée comme une surface sphérique.

3. Dispositif de levier de changement de vitesse (10) selon la revendication 1 ou 2, dans lequel un espacement entre un bord périphérique du premier orifice (28) ou du deuxième orifice (36), en ce que les orifices (28, 36) sont respectivement disposés dans le premier élément mobile (20) et dans le deuxième élément mobile (32), et la surface frontale (34) est rendu sensiblement constante.

4. Dispositif de levier de changement de vitesse (10) selon la revendication 1, dans lequel une surface courbée est formée sur une surface inférieure du premier élément mobile (20) et une surface frontale (34) est formée sur une surface supérieure du deuxième élément mobile (32).

5. Dispositif de levier de changement de vitesse (10) selon la revendication 1, dans lequel la surface frontale (34) est une surface cubique.

6. Dispositif de levier de changement de vitesse (10) selon la revendication 4, dans lequel un bord périphérique de la surface supérieure du deuxième élément mobile (32) est formé afin de faire saillie vers le haut.
